# EUROPÄISCHE PATENTSCHRIFT

(11) **EP 0 504 570 B1**
(45) Veröffentlichungstag und Bekanntmachung des Hinweises auf die Patenterteilung: **17.07.1996**
(21) Anmeldenummer: 92101889.1
(22) Anmeldetag: 05.02.1992
(51) Int. Cl.: G11B 15/12, G11B 19/02, G11B 5/02

(54) **Schaltungsanordnung zum selektiven Durchschalten von Lesesignalen eines Mehrfachmagnetkopfes bei einem Magnetschichtspeicher**
Circuit arrangement for selective switching of read-signals of a multiple magnetic head on a magnetic layer memory
Arrangement de circuit pour la commutation sélective de signaux de lecture d'une tête magnétique multiple dans un enregistreur magnétique

(30) Priorität: 20.03.1991 DE 4109589
(43) Veröffentlichungstag der Anmeldung: 23.09.1992
(73) Patentinhaber: TANDBERG DATA A/S, 0808 Oslo 8 (NO)
(72) Erfinder: Pahr, Per Olaf, c/o Tandberg Data A/S, N-0808 Oslo (NO)
(74) Vertreter: Goddar, Heinz J., Dr.

(56) Entgegenhaltungen:
- DE-A- 3 232 610
- FR-A- 2 367 379
- GB-A- 2 136 189
- IBM TECHNICAL DISCLOSURE BULLETIN. Bd. 17, Nr. 8, Januar 1975, ARMONK, NEW YORK, US, Seiten 2415-2417, S.D. KEIDL: "MULTIPLE HEAD READ/WRITE AND HEAD SELECT CIRCUIT"
- PATENT ABSTRACTS OF JAPAN vol. 13, no. 557 (P-974)(3905) 12. Dezember 1989 & JP-A-12 32 502
- PATENT ABSTRACTS OF JAPAN vol. 12, no.86 (P-677)(2933) 18. März 198 8 & JP-A-62 219 308

## Beschreibung

Die Erfindung bezieht sich auf eine Schaltungsanordnung zum selektiven Durchschalten von Lesesignalen eines von mindestens zwei Magnetsystemen eines Mehrfachmagnetkopfes auf einen gemeinsamen Lesekanal eines Magnetschichtspeichers gemäß dem Oberbegriff des Patentanspruches 1.

Bei Magnetschichtspeichern wird ein im Betriebszustand stationärer Magnetkopf zum Einspeichern bzw. Lesen von Informationen eingesetzt, gegenüber dem ein magnetisches Speichermedium dabei relativ bewegt wird. Dem Fachmann sind eine Vielzahl von Ausführungsformen für Magnetköpfe bekannt, die auf den jeweiligen Anwendungsfall abgestimmt sind. Der Magnetkopf besteht im einfachsten Fall aus einem einzigen Magnetsystem mit einem einen Magnetspalt bildenden Magnetkern und darum gewickelter Magnetspule für beide Betriebsfunktionen Lesen und Schreiben, gegebenenfalls auch noch Löschen einer gespeicherten Information. Insbesondere bei Magnetbandspeichern hat es sich aber auch als günstig erwiesen, Jeweils individuelle Teilmagnetköpfe für diese verschiedenen Betriebsfunktionen vorzusehen. Häufig ist dabei, in Transportrichtung des Magnetbandes gesehen, der Lesekopf zwischen dem Schreibkopf und dem Löschkopf angeordnet. Eine derartige Magnetkopfanordnung erlaubt nicht nur, die einzelnen Teilköpfe speziell im Hinblick auf ihre jeweiligen Funktionen zu optimieren, sondern ermöglicht darüber hinaus auch ein Kontrollesen unmittelbar vorher aufgezeichneter Information während des noch andauernden Schreibvorganges. Man kann einen solchen, aus Teilmagnetköpfen aufgebauten Magnetkopf als kombinierten Magnetkopf oder Schreib/Lesekopf bezeichnen.

Insbesondere bei Magnetbandspeichern ist es darüber hinaus aber auch bekannt, noch kompliziertere Strukturen von Magnetköpfen einzusetzen. Als Mehrfachmagnetkopf wird ein Magnetkopf bezeichnet, der quer zur Transportrichtung des zugeordneten Magnetbandes eine Mehrzahl Von Magnetsystemen aufweist, die jeweils einer Aufzeichnungsspur auf dem Magnetband räumlich zugeordnet sind. Mit einem derartigen Mehrfachmagnetkopf kann insbesondere entweder parallel in mehrere Informationsspuren eingeschrieben bzw. aus mehreren Informationsspuren gleichzeitig ausgelesen werden.

Aber auch in Fällen, in denen ein Schreib- bzw. Lesevorgang jeweils nur für eine einzige Informationsspur durchgeführt wird, kann ein entsprechend aufgebauter Mehrfachmagnetkopf von Vorteil sein, weil er beispielsweise diese Speichervorgänge für beide Transportrichtungen des Magnetbandes ermöglicht. In diesem Fall sind, bezogen auf eine Achse quer zur Längsrichtung des Magnetbandes, nebeneinander mindestens zwei Magnetsysteme angeordnet, die Jeweils mindestens einen Schreib- und einen Leseteilkopf, gegebenenfalls zusätzlich einen Löschkopf enthalten. In Richtung der Längsachse des Magnetbandes sind die Schreib- und Leseteilköpfe dieser beiden Magnetsysteme in ihrer Position miteinander wechselseitig vertauscht. Diese Anordnung erlaubt mit einem derartigen Mehrfachmagnetkopf ein Einspeichern von Information mit unmittelbar nachfolgendem Kontrollesen in beiden Transportrichtungen des Magnetbandes. Aufbauend auf diesem Prinzip ist eine Vielzahl von Ausführungsformen von Mehrfachmagnetköpfen denkbar, bei denen eine Mehrzahl von Magnetsystemen, quer zur Längsrichtung des Magnetbandes gesehen, nebeneinander angeordnet ist.

Die verschiedenen Ausführungsformen von Mehrfachmagnetköpfen können im Hinblick auf Positioniervorgänge beim Betrieb von Magnetbandspeichern spezielle Vorteile haben oder sich auch im Hinblick auf Möglichkeiten zur Spurverfolgung bzw. Spurhaltung als günstig erweisen. Hier sind aber Einzelheiten des geschilderten prinzipiellen Aufbaus von Mehrfachmagnetköpfen an sich nicht von Bedeutung. Vielmehr ist hier das Auswahlproblem von Interesse, das sich ergibt, wenn mit einem derartigen Mehrfachmagnetkopf Information lediglich aus einer selektierten Informationsspur ausgelesen und in einem Lesekanal zur Rückgewinnung von in dieser Informationsspur eingespeicherter Information aufbereitet werden soll. Im Prinzip bedeutet dies, daß im Betriebszustand "Lesen" gleichzeitig in allen Leseteilköpfen des Mehrfachmagnetkopfes beim Überlaufen zugeordneter Informationsspuren Lesesignalspannungen induziert werden. Jedoch sollen lediglich die Lesesignale aus der momentan selektierten Informationsspur in den Lesekanal eingespeist und für die Rückgewinnung der gespeicherten Information aufbereitet werden. Dazu bedarf es einer Auswahleinrichtung, die man als Kanalschalter bezeichnen kann.

Üblicherweise werden von einem Magnetsystem abgegebene Lesesignale zunächst vorverstärkt und dann weiter aufbereitet. Es bietet sich daher an, den Kanalschalter entweder unmittelbar zwischen den einzelnen Magnetsystemen und einem gemeinsamen Vorverstärker anzuordnen, wie dies beispielsweise in "IBM Technical Disclosure Bulletin", Vol. 17, No. 8, Januar 1975, Seiten 2415-2417 beschrieben ist, oder aber für jedes Magnetsystem einen individuellen Vorverstärker vorzusehen und den Kanalschalter zwischen die parallelen Ausgänge der Mehrzahl von Vorverstärkern und die Eingänge des einen Lesekanales einzubauen. Erstere Lösung ist nur mit Aufwand zu realisieren und zudem relativ schwierig wegen der hohen Impedanzwerte, die dabei zu berücksichtigen sind. Weiterhin müssen unter anderem wegen der an sich niedrigen Nutzsignalspannungen auf der Eingangsseite des Kanalschalters besondere Vorkehrungen gegen ein unerwünschtes Übersprechen der nicht selektierten Magnetsysteme auf den Schaltkreis des selektierten Magnetsystemes getroffen werden, da der Kanalschalter nur die vom selektierten Magnetsystem abgegebenen Lesesignale mit an sich niedriger Signalamplitude als Nutzsignale selektiv durchschalten muß.

Ein weiteres wesentliches Problem liegt in der Schwierigkeit einer ausreichenden Gleichtaktunterdrückung, um einen gewünschten Störabstand bei den durchgeschalteten Lesesignalen zu erreichen. Werden dagegen individuelle Vorverstärker vorgesehen und wird der Kanalschalter diesen nachgeordnet, muß der eigentliche Kanalschalter höhere Leistungen verarbeiten und dementsprechend aufwendig ausgelegt sein.

Der vorliegenden Erfindung liegt daher die Aufgabe zugrunde, eine Schaltungsanordnung der eingangs genannten Art derart weiterzubilden, daß das selektive Durchschalten der Lesesignale eines ausgewählten Magnetsystemes auf den Lesekanal des Magnetschichtspeichers mit einfachen Mitteln möglichst störungsfrei und betriebssicher erfolgt.

Bei einer Schaltungsanordnung der eingangs genannten Art wird diese Aufgabe erfindungsgemäß mit den im Kennzeichen des Patentanspruches 1 beschriebenen Merkmalen gelöst.

Diese erfindungsgemäße Lösung beinhaltet zunächst eine definierte räumliche Anordnung zweier aufeinanderfolgender Stufen einer Mehrzahl von jeweils einem der Magnetsysteme des Mehrfachmagnetkopfes zugeordneten Vorverstärkern. Jeder Vorverstärker weist eine Eingangsstufe auf, die unmittelbar mit dem Mehrfachmagnetkopf eine mechanische Einheit bildet. Die nachfolgende zweite Stufe jedes Vorverstärkers dagegen ist davon räumlich getrennt auf einer Leiterplatte angeordnet, die die gesamte Leseelektronik trägt, d. h. diejenigen Schaltungsteile umfaßt, die man üblicherweise als den Lesekanal bezeichnet. Beide Stufen der Vorverstärker sind untereinander nur über eine flexible Verbindungsleitung verbunden, die jedoch keine individuellen Versorgungsleitungen für die von der Leseelektronik räumlich abgesetzte Eingangsstufe jedes Vorverstärkers aufweist. Dies wird dadurch möglich, daß das Schaltungskonzept der Vorverstärker so ausgelegt ist, daß den Schaltelementen der Eingangsstufen der Vorverstärker ihre gleichstrommäßige Vorspannung unmittelbar über die Signalleitungen zugeführt wird.

Funktionell beinhaltet das Schaltungsprinzip vor allem, daß sich die Eingangsstufen der Vorverstärker wie spannungsgesteuerte Widerstände verhalten. Die Ausgänge aller Eingangsstufen, die zu einem gegebenen Zeitpunkt nicht selektiert sind, liegen hochohmig, so daß - ideal betrachtet - über die zugeordneten Signalleitungen in die entsprechenden Endstufen der nicht aktivierten Vorverstärker keine Signale übertragen werden. Diese Funktionsweise eliminiert ein mögliches Übersprechen von einem Vorverstärker auf den anderen und damit eine Störung in der Aufbereitung der Lesesignale eines selektierten Magnetsystemes durch Einflüsse der beim Lesevorgang in den momentan nicht genutzten Magnetsystemen induzierten Signalspannungen. Zusammenfassend läßt sich dieses Funktionsprinzip mit anderen Worten auch so beschreiben: Wie bei einer konventionellen Lösung verbindet eine geschirmt oder ungeschirmt ausgeführte, vieladrige, flexible Verbindungsleitung die Magnetsysteme eines Mehrfachmagnetkopfes mit der davon räumlich entfernt angeordneten Leseelektronik. Aus den Signalzuständen an der Schnittstelle zur Leseelektronik läßt sich nicht ohne weiteres ableiten, daß dem Mehrfachmagnetkopf aktive Schaltkreise unmittelbar räumlich zugeordnet sind. So führen beispielsweise von der Schnittstelle zu dem Mehrfachmagnetkopf keinerlei zusätzliche Versorgungsleitungen. Gegenüber einer konventionellen Lösung besteht aber der wesentliche Unterschied, daß - abgesehen von in der Praxis immer auftretenden, unvermeidbaren Störspannungsanteilen - Lesesignale in die Leseelektronik lediglich von einem aktivierten Magnetsystem übertragen werden, während alle Signalleitungen, die an momentan nicht selektierte Magnetsysteme angeschlossen sind, hochohmig abgeschlossen erscheinen.

Wie in Unteransprüchen beschriebene Weiterbildungen der Erfindung zeigen, läßt sich das diskutierte Schaltungsprinzip in einer Mehrzahl von Varianten realisieren. Vorteilhaft ist dabei, daß die aktiven Elemente in der Eingangs- bzw. Endstufe eines Vorverstärkers paarweise eingesetzt sind. So lassen sich in einem gemeinsamen Schaltkreis aufgebaute Transistorpaare, gegebenenfalls auch Gate Arrays bei dem Schaltungsaufbau verwenden. Daraus folgt, daß die paarweise eingesetzten aktiven Elemente identische elektrische Charakteristiken aufweisen, was die schaltungstechnische Realisierung gewünschter Eigenschaften, beispielsweise im Hinblick auf einen guten Störabstand (Signal/Störspannungsverhältnis), aber auch eine hohe Gleichtaktunterdrückung vereinfacht.

In bezug auf den Störabstand erweisen sich die marktüblichen integrierten Verstärkerschaltkreise als zu wenig störsicher. Andererseits sind aber diskrete, oft paarweise gepackte Transistoren für hohe Schaltfrequenzen mit sehr niedrigem Basiswiderstand verfügbar, die damit nur wenig zu thermisch hervorgerufenen Störspannungen beitragen und sich mit Vorteil in den Eingangsstufen einsetzen lassen.

Störspannungen werden weiterhin vor allem über die Magnetspulen der Magnetsysteme und die Verbindungsleitungen zu dem Lesekanal aufgenommen. Es ist daher wesentlich, den Nutzsignalpegel auf diesen Verbindungsleitungen möglichst hoch zu legen. Der Nutzsignalpegel ist aber bekanntlich proportional zur Windungszahl der Magnetspulen, andererseits sinkt die Eigenresonanzfrequenz mit wachsender Windungszahl, was auf die kapazitive Belastung der Schaltungsanordnung zurückzuführen ist. Die kapazitive Belastung ergibt sich aus der Summe der Windungskapazitäten sowie der externen, d. h. der weiteren Schaltkreiskapazitäten. Mit den erfindungsgemäß ausgebildeten Vorverstärkern gelingt es, diese externen Kapazitäten zu reduzieren, so daß sich so bei vorgegebener Eigenresonanzfrequenz mit erhöhter Windungszahl der Signalpegel optimieren läßt. Dies ist insbesondere für den Schaltungsaufbau bei induktiven Magnetköpfen mit Magnetspalten unter 1 um von großer Bedeutung.

Ein weiterer Gesichtspunkt betrifft die Gleichtaktunterdrükkung. Die meisten Störspannungsanteile, die in die dem Lesekanal vorgeschaltete Schaltungsanordnung eingekoppelt werden, sind Gleichtaktspannungen. Bei Magnetbandgeräten rühren sie im wesentlichen von dem Bandantriebsmotor selbst oder seinen Versorgungsleitungen her und werden über die Magnetspulenwindun-gen selbst induktiv, aber auch über die Versorgungsleitungen eingekoppelt.

Um den erwähnten Vorteil eines relativ hohen Nutzsignalpegels nicht wieder einzubüßen, ist es daher von Bedeutung, daß die Endstufen des Vorverstärkers und weitere angeschlossene Schaltungsteile so ausgelegt werden können, daß sie eine hohe Gleichtaktunterdrückung aufweisen. Das erfindungsgemäße Schaltungskonzept trägt auch dieser Forderung Rechnung.

Dazu kommt weiterhin, daß die gesamte Schaltungsanordnung einen niedrigen Stromverbrauch ermöglicht, da voraussetzungsgemäß ein Nutzstrom lediglich in den jeweils selektierten Schaltungsteilen fließt. Deshalb läßt sich die Schaltungsanordnung auch mit kostengünstigen und dennoch störsicheren Schaltelementen verwirklichen. Diese verschiedenen Weiterbildungen sind in Unteransprüchen definiert und werden im einzelnen auch bei der Beschreibung von Ausführungsformen der Erfindung näher erläutert.

Solche Ausführungsbeispiele der Erfindung werden im folgenden anhand der Zeichnung näher erläutert. Dabei zeigt:
Figur 1 ein Blockschaltbild für eine Anordnung mit mehreren Magnetkopfsystemen eines Magnetschichtspeichers, die selektiv aktivierbar sind, um ein Lesesignal des jeweils aktivierten Magnetkopfsystemes auf einen Lesekanal durchzuschalten,
Figur 2 eine erste Ausführungsform mit einer in Komplementärtechnik ausgebildeten Vorverstärkerstufe, die eingangsseitig unmittelbar an die Spule des Magnetsystemes angeschlossen und ausgangsseitig über eine verdrillte Zweidrahtleitung mit einer Leistungsstufe verbunden ist, die auf einer räumlich getrennten Leiterplatte für die Leseelektronik angeordnet ist,
Figur 3 und Figur 4 jeweils eine weitere Ausführungsform für eine solche einer Magnetspule unmittelbar zugeordnete Vorverstärkerstufe und
Figur 5 eine Leistungsschaltstufe zum selektiven Anschalten eines ausgewählten Magnetkopfsystemes bzw. einer der Ausführungsformen gemäß Figur 3 bzw. Figur 4.

Bei Magnetschichtspeichern, beispielsweise Magnetbandkassettengeräten ist es vielfach üblich, auf dem Aufzeichnungsträgar, im angenommenen Beispiel einem Magnetband, Dateninformation in einer Vielzahl von parallelen Spuren aufzuzeichnen, um die Speicherkapazität des Aufzeichnungsträgers möglichst auszuschöpfen. Dennoch wird in vielen Fällen Dateninformation jeweils immer nur von einer einzigen, selektierten Informationsspur gelesen.

Dafür genügt an sich ein Magnetkopf mit einer einzigen Lesespule, der dann jeweils mit seinem Magnetspalt über der selektierten Informationsspur positioniert wird. Bekanntlich werden aber auch Mehrfachmagnetköpfe eingesetzt, was beispielsweise die Spurauswahl erleichtert. Im vorliegenden Fall ist die spezielle Ausgestaltung derartiger Mehrfachmagnetköpfe von untergeordneter Bedeutung. Dem Fachmann ist dafür eine Reihe von Lösungen als solche bekannt, deshalb erübrigt es sich hier auch Ausgestaltungen eines Mehrfachmagnetkopfes im einzelnen zu erläutern. Wichtig ist lediglich, daß die Leseelektronik eines Magnetschichtspeichergerätes, das mit einem derartigen Mehrfachmagnetkopf ausgestattet ist, in der Lage sein muß, bei einem Lesevorgang ein bestimmtes Magnetkopfsystem selektiv zu aktivieren. Dabei ist das aktivierte Magnetkopfsystem individuell auf einen einzigen Lesekanal möglichst störungsfrei durchzuschalten, so daß dort vom Magnetkopfsystem abgegebene Lesesignale weiterverarbeitet und schließlich ausgewertet werden können.

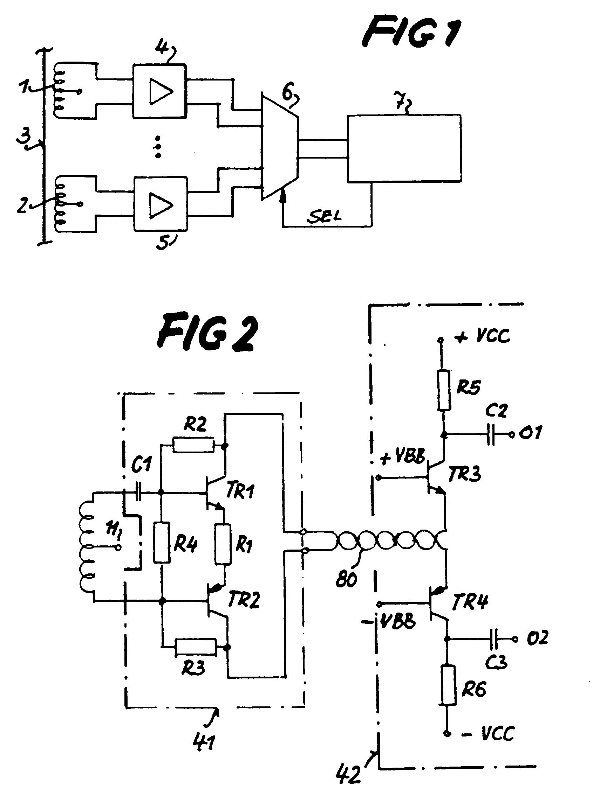

In Figur 1 ist schematisch ein mögliches Prinzip einer derartigen Schaltungsanordnung dargestellt. Stellvertretend für eine Mehrzahl von Magnetkopfsystemen eines Magnetkopfes sind zwei Magnetspulen 1 bzw. 2 gezeigt, die ein Magnetband 3 abtasten. Diesen Magnetspulen ist je ein Vorverstärker 4 bzw. 5 zugeordnet, deren Ausgangssignale parallel einer Auswahleinheit 6 zugeführt sind. Diese Auswahleinheit schaltet, durch ein Auswahlsignal SEL vorbereitet, selektiv die Ausgänge eines der Vorverstärker 4 bzw. 5 auf einen schematisch angegebenen Lesekanal 7 durch. Die weitere Aufbereitung und Auswertung des durchgeschalteten Lesesignales geschieht in konventioneller Weise und ist hier im vorliegenden Fall von untergeordneter Bedeutung.

Dagegen ist es wesentlich, in welcher Weise die Auswahl eines bestimmten Magnetkopfsystemes durchgeführt wird. Bei üblichen Streamerbandgeräten, einem typischen Anwendungsfall, bei dem auch Mehrfachmagnetköpfe zum Lesen jeweils nur einer einzigen, gegebenenfalls noch einer weiteren Informationsspur gleichzeitig eingesetzt werden, kann eine solche Auswahlschaltung entweder zwischen den Magnetspulen und den Vorverstärkern oder ähnlich wie in Figur 1 hinter den Vorverstärkern angeordnet sein. Liegt sie im Leitungsweg zwischen den Magnetspulen und den Vorverstärkern, dann wird die Ausgestaltung einer solchen Auswahlschaltung relativ aufwendig und schwierig beherrschbar. Dies liegt einerseits an den hohen Impedanzwerten im Leitungskreis, andererseits aber auch daran, daß die momentan nicht selektierten Magnetspulen Störsignale liefern, die zum Übersprechen führen können bzw. als Gleichtaktstörungen eingekoppelt werden können. Wird dagegen die Auswahl eines bestimmten Magnetkopfsystemes erst hinter dem ihm zugeordneten Vorverstärker vorgenommen, dann wird die Auswahleinheit, d. h. der eigentliche Schalter wesentlich stärker belastet. Beide bekannten Lösungen haben daher ihre Nachteile.

Im vorliegenden Fall wird daher ein anderer Weg eingeschlagen. Jeder Magnetspule 1 bzw. 2 eines Mehrfachmagnetkopfes wird räumlich unmittelbar eine Eingangsstufe eines Vorverstärkers zugeordnet, dessen eigentliche Leistungsstufe davon räumlich getrennt auf einer Leiterplatte für die gesamte Leseelektronik angeordnet ist. Die der Magnetspule 1 bzw. 2 zugeordnete Eingangsstufe ist mit der Leistungsendstufe des Vorverstärkers über verdrillte Leitungen verbunden. In der Eingangsstufe vorgesehene Koppelnetzwerke sind so ausgestaltet, daß diese sich selbst sperrt, sofern die angeschlossene Leistungsendstufe des Vorverstärkers nicht aktiviert ist. Dieses Schaltungskonzept führt dazu, daß lediglich das momentan selektierte Magnetkopfsystem über seine angeschlossene Eingangsstufe des Vorverstärkers Signalanteile an die Auswahleinheit 6 liefert, während die übrigen, momentan nicht selektierten Magnetkopfsysteme nicht etwa lediglich leer laufen, sondern aufgrund der oben definierten Funktion der Eingangsstufe des Vorverstärkers stillgelegt sind. Sie können damit in diesem Zustand im wesentlichen keine Störsignalanteile in die Auswahleinheit 6 einkoppeln.

In Figur 2 ist dieses Schaltungskonzept an einem einfachen Beispiel dargestellt. Die z. B. der Magnetspule 1 räumlich unmittelbar zugeordnete Eingangsstufe 41 des Vorverstärkers 4 besteht aus zwei Komplementärtransistoren TR1 bzw. TR2, deren Emitter-Kollektor-Strecken über einen relativ niederohmigen Lastwiderstand R1 in Serie geschaltet sind. Die Basis des ersten Transistors TR1 ist über einen ersten Kondensator C1 an ein Ende der Magnetspule 1, die Basis des anderen Transistors TR2 unmittelbar an das andere Ende der Magnetspule 1 angeschlossen. Ein möglicher Mittelabgriff der Magnetspule 1 bleibt in diesem Falle unbenutzt. Um den Kollektor-Emitter-Strompfad der Komplementärtransistoren TR1 und TR2 im nicht ausgewählten Zustand sicher zu sperren, ist ein hochohmiges Koppelnetzwerk vorgesehen. Dieses besteht aus je einem Kollektor-Basis-Widerstand R2 bzw. R3 für jeden der beiden Komplementärtransistoren sowie einem weiteren Widerstand R4, der zwischen den beiden Basisanschlüssen der Komplementärtransistoren TR1 und TR2 angeordnet ist.

Die beiden Ausgänge, d. h. die Kollektoranschlüsse der beiden Komplementärtransistoren TR1 und TR2 sind über eine zweiadrige Verbindungsleitung 80, d. h. ein miteinander verdrilltes Leitungspaar mit der räumlich getrennten, auf der Leiterplatte für die Leseelektronik des Magnetschichtspeichers angeordneten Endstufe 42 des Vorverstärkers 4 verbunden. Diese Endstufe 42 besteht wiederum aus einem Paar von weiteren Komplementärtransistoren TR3 und TR4, an deren Emitter jeweils eine der Leitungen der Verbindungsleitung 80 angeschlossen ist. Die Kollektoren dieser beiden weiteren Komplementärtransistoren TR3 und TR4 liegen jeweils über einen Kollektorwiderstand R5 bzw. R6 an positiver bzw. negativer Versorgungsspannung VCC. Jeder Basis dieser beiden weiteren Komplementärtransistoren TR3 bzw. TR4 wird im ausgewählten Zustand positive bzw. negative Basisspannung VBB zugeführt, die die entsprechenden Komplementärtransistoren leitend schaltet. In diesem Falle ergibt sich ein durchgeschalteter Strompfad über die vier in Serie liegenden Komplementärtransistoren TR3, TR1, TR2 und TR4. Über Koppelkondensatoren C2 bzw. C3, die jeweils an einen der Kollektoren der weiteren Komplementärtransistoren TR3 bzw. TR4 angeschlossen sind, werden von der Magnetspule 1 abgegebene und anschließend vorverstärkte Lesesignale als Ausgangssignale an Ausgängen 01 und 02 dieses Vorverstärkers abgegeben.

Die anhand von Figur 2 beschriebene Schaltungsanordnung hat folgende wesentliche Eigenschaften. Der an der Magnetspule 1 angeschlossene Vorverstärker 4 besteht aus einer Eingangsstufe 41, die räumlich unmittelbar am Magnetkopf angeordnet ist. Diese räumliche Einheit ist in Figur 2 durch die unmittelbar mit den Eingängen der Eingangsstufe 41 verbundene Magnetspule 1 angedeutet. Dagegen ist die Endstufe 42 dieses Vorverstärkers unmittelbar auf der Leiterplatte für die gesamte Leseelektronik des Magnetschichtspeichers angeordnet und mit der Eingangsstufe 41 nur über die zweiadrige, verdrillte Verbindungsleitung 80 verbunden. Mit anderen Worten führt, von der Eingangsseite der Leiterplatte der Leseelektronik aus gesehen, jeweils lediglich eine zweiadrige Verbindungsleitung zu einem Magnetkopfsystem z. B. mit der Magnetspule 1. Der dieser Magnetspule 1 räumlich unmittelbar zugeordnete Schaltungsteil des Vorverstärkers kann als spannungsgesteuerter Widerstand angesehen werden. Er benötigt selbst, von der zweiadrigen Verbindungsleitung 80 abgesehen, keine individuellen Versorgungsleitungen.

Weiterhin ist es für die Auswahl-Schaltfunktion wesentlich, daß sich die z. B. der Magnetspule 1 unmittelbar zugeordnete Eingangsstufe 41 des Vorverstärkers 4 selbst vorspannt und damit im nicht ausgewählten Zustand ausgangsseitig hochohmig schaltet. Die Schaltungsanordnung des Vorverstärkers 4 ist so ausgelegt, daß sich die Gleichtaktspannungen an beiden Teilen der Magnetspule 1 möglichst weitgehend gegenseitig auslöschen. Dennoch verbleibende Gleichtaktspannungen, die dann auf den beiden Adern der Verbindungsleitung 80 übertragen werden, treten als gleichphasige Spannungen an den Kollektoren der weiteren Komplementärtransistoren TR3 bzw. TR4 auf. Auch diese Signalanteile könnten daher noch unterdrückt werden, falls man, was in Figur 2 nicht mehr dargestellt ist, die Ausgänge 01 und 02 des Vorverstärkers 4 an einen Differenzverstärker anschließt. Allerdings erfordert die anhand von Figur 2 geschilderte, vor allem das Schaltungskonzept verdeutlichende Ausführungsform die Verwendung von Komplementärtransistoren.

Erfahrungsgemäß ist es etwas aufwendiger, Transistoren unterschiedlichen Leitfähigkeitstyps paarweise genau aufeinander abzustimmen, auch wenn heute abgestimmte, auf einem gemeinsamen Substrat aufgebaute Transistorpaare unterschiedlichen Leitfähigkeitstyps verfügbar sind. Bei diesen Randbedingungen wird die in Figur 2 dargestellte Ausführungsform mit Vorteil in Anwendungsfällen eingesetzt, bei denen Gleichtaktstörspannungen von geringerem Einfluß sind. Dies kann z. B. dann der Fall sein, wenn die wesentliche Störspannungsquelle als Gleichstrommotor für den Antrieb des Speichermediums ausgebildet ist. In diesem Fall bildet die nicht ganz optimale Gleichtaktunterdrückung der Schaltung selbst keine so wesentliche Rolle, so daß der Vorteil ihres sehr kompakten Aufbaus voll genutzt werden kann.

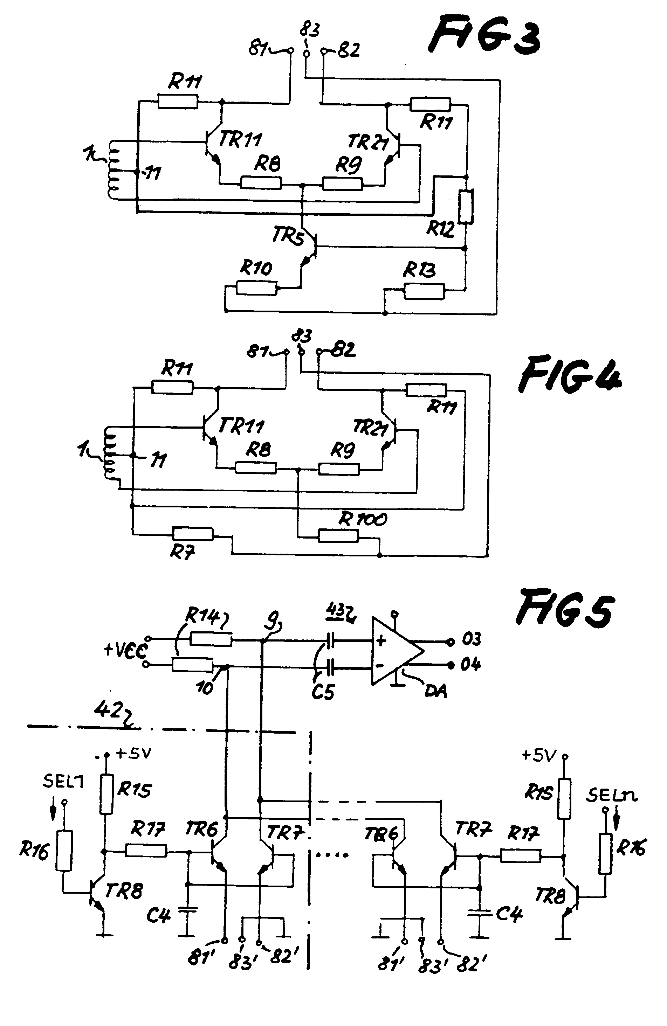

In Figur 3 ist eine weitere Ausführungsform für die einer Magnetspule 1 unmittelbar zuzuordnende Eingangsstufe 41 des Vorverstärkers 4 dargestellt, bei der statt Komplementärtransistoren lediglich npn-Transistoren eingesetzt sind. Bei dieser Ausführungsform ist eine dreiadrige Verbindungsleitung zur entsprechenden Endstufe auf der Leiterplatte für die Leseelektronik des Magnetschichtspeichers vorgesehen, wie drei Leitungsanschlüsse 81, 82, 83 andeuten. Wie noch zu erläutern sein wird, wird über den dritten Leitungsanschluß 83 eine Masseverbindung zu der entsprechenden Endstufe geführt. An die beiden anderen Leitungsanschlüsse 81 und 82 ist jeweils der Kollektor eines Transistors TR11 bzw. TR21 angeschlossen. Deren Basisanschlüsse sind jeweils mit einem der beiden Enden der Magnetspule 1 verbunden.

Im Gegensatz zu der anhand von Figur 2 vorstehend beschriebenen Schaltungsanordnung wird hier der Mittelabgriff 11 der Magnetspule 1 ausgenutzt, was die Verwendung von Transistoren nur eines Leitfähigkeitstyps ermöglicht. Dieser Mittelabgriff 11 ist über je einen hochohmigen Kollektorwiderstand R11 mit den Kollektoren der Transistoren TR11 bzw. TR21 und damit auch mit den Leitungsanschlüssen 81 bzw. 82 verbunden. Weiterhin ist der Mittelabgriff 11 über eine Serienschaltung von zwei weiteren Widerständen R12 und R13 an den auf Masse gelegten Leitungsanschluß 83 angeschlossen. Die beiden Emitter der Transistoren TR11 und TR21 sind entweder direkt oder - wie dargestellt - über je einen niederohmigen Emitterwiderstand R8 bzw. R9 gemeinsam mit dem Kollektor eines weiteren Transistors TR5 verbunden, der als Schalttransistor eingesetzt wird. Dieser ist emitterseitig über einen relativ niederohmigen Emitterwiderstand R10 mit dem masseführenden Leitungsanschluß 83 und mit seiner Basis mit dem Verbindungspunkt der beiden Widerstände R12 und R13 verbunden. Der Schalttransistor TR5 liegt somit im gemeinsamen Strompfad der beiden Transistoren TR11 bzw. TR21 und wirkt als interne Stromquelle. Alle drei Transistoren TR11, TR21 und TR5 werden somit gleichstrommäßig über die Leitungsanschlüsse 81 bzw. 82 vorgespannt.

Wie noch zu erläutern sein wird, liegt im aktivierten Zustand der Schaltungsanordnung an den Leitungsanschlüssen 81 und 82 ein vorbestimmtes Gleichspannungspotential. Über den Spannungsteiler, bestehend aus der Serienschaltung der Vorwiderstände R12 und R13, wird damit der weitere Transistor TR5 leitend geschaltet und bildet zusammen mit seinem Emitterwiderstand R10 eine Stromquelle im Strompfad der beiden Transistoren TR11 und TR21 der Eingangsstufe 41. Analog wird über den hochohmigen Spannungsteiler mit den Widerständen R11, R12, R13 am Mittelabgriff 11 der Magnetspule 1 eine Gleichstrom-Vorspannung erzeugt. Diese wird jeweils der in einer der beiden Teilwicklungen der Magnetspule 1 beim Lesevorgang induzierten Spannung überlagert und dem Basisanschluß des jeweiligen Transistors TR11 bzw. TR21 angeboten. Die Transistoren werden damit der jeweiligen Lesesignalamplitude entsprechend ausgesteuert. Damit fließt über die Leitungsanschlüsse 81 bzw. 82 ein analoger Gegentaktstrom, der über den Leitungsanschluß 83 in die räumlich abgesetzte Endstufe 42 des Vorverstärkers 4 zurückgeführt wird. Im Idealfall, bei voll abgeglichenen Signalzweigen, ist dieser Gegentaktstrom konstant und unabhängig von dem Momentanwert des jeweiligen Lesesignales.

Gegenüber der anhand von Figur 2 geschilderten Ausführungsform liefert die Schaltungsanordnung gemäß Figur 3 bei vergleichbar günstigem Stromverbrauch eine bessere Gleichtaktunterdrückung und eine bessere Hochfrequenz-Übertragungscharakteristik. Bezüglich der Stromversorgung gilt auch hier, daß dafür keine individuellen Leitungen erforderlich sind, da die Gleichstrom-Vorspannung über das beschriebene Widerstandsnetzwerk an den mit den Leitungsanschlüssen 81 und 82 verbundenen Kollektoren der Transistoren TR11 bzw. TR21 abgenommen wird.

Eine hohe Gleichtaktunterdrückung wird dadurch erreicht, daß die unvermeidbaren Streukapazitäten zwischen den Wicklungen der Magnetspule 1 und den Kollektoren der Transistoren TR11 bzw. TR21 einander möglichst angeglichen sind. Die in Figur 3 dargestellte Ausführungsform für eine der Magnetspule 1 unmittelbar zugeordnete Eingangsstufe 41 eines Vorverstärkers 4 mit einer dreiadrigen, verdrillten und ungeschirmten Verbindungsleitung zur Endstufe 42 des Vorverstärkers 4 über die Leitungsanschlüsse 81 bis 83 repräsentiert allerdings lediglich eine bestimmte schaltungsmäßige Ausgestaltung eines allgemeinen Schaltungskonzeptes, die in vielfacher Hinsicht variiert werden kann.

In Figur 4 ist als Beispiel für eine derartige Variante eine weitere Ausführungsform für eine der Magnetspule 1 räumlich unmittelbar zugeordnete Eingangsstufe 41 eines Vorverstärkers 4 dargestellt. Wieder ist die Eingangsstufe über Leitungsanschlüsse 81 bis 83 dreiadrig mit der noch zu erläuternden Endstufe 42 verbunden. Auch hier sind die beiden Schaltungszweige mit den TransistorenTR11 bzw. TR21 symmetrisch ausgeführt. Die Gleichstrom-Vorspannung für diese beiden Transistoren wird über Je einen gleich hohen Vorspannungswiderstand, d. h. die Kollektorwiderstände Rll erzeugt. Weiterhin ist die Stromquelle TR5, R10, R12, R13 der Schaltungsanordnung von Figur 3 durch einen ohmschen Widerstand R100 ersetzt. Der Mittelabgriff 11 ist über einen weiteren Widerstand R7 mit dem masseführenden Leitungsanschluß 83 verbunden. Bei durchaus gleichartiger Schaltungsfunktion illustriert das Ausführungsbeispiel gemäß Figur 4, wie durch die Ausgestaltung des Vorspannungsnetzwerkes das angestrebte Ziel erreicht werden kann, bei vereinfachtem und damit kompaktem Aufbau, die in beiden Schaltungszweigen wirksamen Streukapazitäten möglichst einander anzunähern, so daß sich ihr Einfluß im Hinblick auf die angestrebte hohe Gleichtaktunterdrückung im wesentlichen aufhebt.

Eine weitere Schaltungsvariante, die sich einfach implementieren läßt, hohe Gleichtaktunterdrückung bietet und kompakt aufzubauen ist, bestünde darin, den massenführenden Leitungsanschluß 83 unmittelbar an den Verbindungspunkt der Emitterwiderstände R8, R9 anzuschließen, d. h. die Widerstände R7 und R100 fortzulassen. Dabei werden die Kollektorwiderstände Rll parallel über eine Vorspannungsdiode, z. B. eine Zenerdiode mit dem Mittelabgriff 11 der Magnetspule 1 verbunden.

In Figur 5 ist nun ein Beispiel für die Ausgestaltung der Endstufe 42 des Vorverstärkers 4 dargestellt, an die eine Eingangsstufe 41 gemäß Figur 3 bzw. Figur 4 über jeweils eine dreiadrige Verbindungsleitung anschließbar ist. Die in Figur 5 dargestellte Schaltungsanordnung ist im Grunde ein Kanalschalter mit einem Differentialverstärker und einer Mehrzahl von selektiv aktivierbaren Leistungsverstärkerstufen, die jeweils einem Magnetkopfsystem, wie in Figur 3 bzw. Figur 4 dargestellt, zugeordnet sind und auf eine gemeinsame Ausgangsendstufe 43 arbeiten. Von einer möglichen Mehrzahl parallel geschalteter Verstärkerstufen 42 sind in Figur 5 beispielhaft lediglich zwei dargestellt.

Jede dieser Verstärkerstufen 42 weist ein Paar von weiteren Transistoren TR6 bzw. TR7 auf. Deren Emitter sind an Leitungsanschlüsse 81' bzw. 82', die mit den entsprechenden Leitungsanschlüssen 81 bzw. 82 einer räumlich entfernten Eingangsstufe 41 des Vorverstärkers 4 gemäß Figur 3 bzw. Figur 4 über eine dreiadrige, verdrillte Verbindungsleitung, nicht dargestellt, verbunden sind. Ein dritter Leitungsanschluß 83' für die dritte Ader der Verbindungsleitung ist in diesem Beispiel an Masse gelagt. Kollektorseitig liegen beide Transistoren TR6 und TR7 über je einen Kollektorwiderstand R14 an Versorgungsspannung VCC.

Die Basisanschlüsse beider Transistoren TR6 und TR7 liegen parallel an einem Schaltnetzwerk mit einem weiteren Transistor TR8, dessen Kollektor-Emitter-Strecke in Serie mit einem Kollektorwiderstand R15 zwischen + 5 V als Betriebsspannung und Masse angeordnet ist. Über einen Vorwiderstand R16 wird der Basis dieses Schalttransistors TR8 jeweils ein Auswahlsignal SEL1 bzw. SELn zugeführt. Diese Auswahlsignale werden in der Elektronik des Lesekanales 7, wie anhand von Figur 1 bereits grundsätzlich erläutert, als Steuersignale für die individuelle Aktivierung der einzelnen Magnetkopfsysteme erzeugt. Der Kollektor des Schalttransistors TR8 ist über ein Koppelnetzwerk, bestehend aus einem Koppelwiderstand R17 und einem Ableitkondensator C4, parallel mit den Basisanschlüssen der beiden zugeordneten Leistungsstufentransistoren TR6 bzw. TR7 verbunden und schaltet diese damit, ausgelöst durch das entsprechende Auswahlsignal z. B. SEL1, leitend. In diesem Zustand liegt dann über die entsprechende Verbindungsleitung Spannung an den angeschlossenen Leitungsanschlüssen 81 bzw. 82 einer entsprechenden Eingangsstufe 41 gemäß Figur 3 bzw. Figur 4. Andernfalls liegen die Emitter der beiden Transistoren TR6 bzw. TR7 hochohmig und blockieren damit in Kombination mit dem entsprechenden Vorwiderstandsnetzwerk die angeschlossene Eingangsstufe 41.
Den parallel geschalteten Endstufen 42 der Vorverstärker 4 ist eine gemeinsame Ausgangsstufe 43 zugeordnet.
Diese weist einen Differenzspannungsverstärker DA auf, dessen Signaleingänge jeweils über einen weiteren Koppelkondensator C5 an je einen Verbindungspunkt 9 bzw. 10 angeschlossen sind. Diese Verbindungspunkte 9 bzw. 10 sind Schaltungsknoten, an die einerseits die Kollektoren der einen oder der anderen Endstufentransistoren TR6 bzw. TR7 parallel angeschlossen sind und die andererseits über je einen der Kollektor- bzw. Lastwiderstände R14 an positive Versorgungsspannung + VCC gelegt sind. Ein Paar von Ausgängen des Differenzspannungsverstärkers DA bildet zwei Signalausgänge 03 bzw. 04 des Kanalschalters, die an nicht dargestellte Eingänge des eigentlichen Lesekanals angeschlossen sind.

Funktionell betrachtet, ist es für diese Schaltungsanordnung wesentlich, daß die beiden Kollektorwiderstände R14 gut aufeinander abgestimmt sind, um eine hohe Gleichtaktunterdrückung zu erreichen. Eine dennoch unvermeidbare Offsetspannung an diesen Widerständen wird durch die Koppelkondensatoren C5 herabgesetzt. Schließlich werden noch verbliebene gleichphasige Gleichtaktstörspannungen durch den Differenzspannungsverstärker DA unterdrückt.

Die beschriebene Schaltungsanordnung hat u. a. den Vorteil, daß preisgünstige, störungsarme Transistoren, vorzugsweise paarweise, bei der Schaltungsrealisierung eingesetzt werden können, denn der Stromverbrauch der Schaltung läßt sich für jeden Anwendungsfall optimieren und ist nach dem Schaltungskonzept relativ niedrig, da lediglich der jeweils selektierte Vorverstärker 4 Strom zieht, während die dazu parallel geschalteten weiteren Vorverstärker gesperrt sind. Als Verbindungsleitungen kommen flexible, geschirmte, aber auch ungeschirmte Leitungen in Frage, wobei ein Übersprechen vermieden wird, da die jeweils nicht aktivierten Vorverstärker 4 sicher blockiert sind.

Auch für die in Figur 5 dargestellten Endstufen 42 der Vorverstärker sind weitere Schaltungsvarianten denkbar. Für die Eingangsstufen 41 der Vorverstärker wurde insbesondere am Schaltungsbeispiel gemäß Figur 4 erläutert, daß auf eine interne Stromquelle - in Figur 3 mit dem Schalttransistor TR5 und seinem Vorspannungsnetzwerk gezeigt - in den Eingangsstufen 41 verzichtet werden kann. Man kann eine solche Schaltstufe in die räumlich entfernt liegenden Endstufen der Vorverstärker verlegen.

Anstatt den masseführenden Leitungsanschluß 83' direkt mit Masse zu verbinden, wird man in diesem Fall die Kollektor-Emitter-Strecke eines Schalttransistors in Serie mit einem Emitterwiderstand zwischen diesem Leitungsanschluß 83' und Masse anordnen. Dies entspricht schaltungstechnisch genau dem Beispiel von Figur 3 mit dem einzigen Unterschied einer anderen räumlichen Anordnung und braucht deshalb nicht eigens dargestellt zu werden. Für die gleichstrommäßige Vorspannung dieses Transistors ist lediglich ein Widerstandsnetzwerk vorzusehen, das zwischen einer angepaßten Versorgungsspannung und Masse liegt. Wegen der geringeren räumlichen Beschränkung im Endstufenbereich der Vorverstärker 4 sowie der einfacheren Stromversorgung bietet diese Variante Vorteile besonders in kritischen Anwendungsfällen, wenn es auf einen sehr kompakten Aufbau der Eingangsstufen wesentlich ankommt.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausgestaltungen wesentlich sein.

### Bezugszeichenliste

- 1, 2: Magnetspulen
- 3: Magnetband
- 4, 5: Vorverstärker
- 6: Auswahleinheit
- SEL: Auswahlsignal
- 7: Lesekanal
- 41: Eingangsstufe von 4
- TR1, TR2: Komplementärtransistoren
- R1: Lastwiderstand
- C1: Kondensator
- R2, R3: Kollektor-Basis-Widerstände von TR1 bzw. TR2
- R4: weiterer Widerstand
- 80: zweiadrige Verbindungsleitung
- 42: Endstufe von 4
- TR3, TR4: weitere Komplementärtransistoren
- R5, R6: Kollektorwiderstände von TR3 bzw. TR4
- VCC: Versorgungsspanung für TR3, TR4
- VBB: Basisspannung für TR3, TR4
- C2, C3: Koppelkondensatoren
- 01, 02: Ausgänge des Vorverstärkers
- 81, 82, 83: Leitungsanschlüsse
- TR11, TR21: Transistoren der Eingangsstufe
- 11: Mittelabgriff der Magnetspule 1
- R7: weiterer Widerstand
- R8, R9: Emitterwiderstände von TR11 bzw. TR21
- TR5: weiterer Transistor
- R10: Emitterwiderstand von TR5
- R11, R12, R13: Vorspannungswiderstände für TR11, TR21, TR5
- TR6, TR7 S: Schaltstufentransistoren
- 81', 82', 83': weitere Leitungsanschlüsse
- R14: Kollektorwiderstände von TR6 bzw. TR7
- TR8: Schalttransistor
- R15: Kollektorwiderstand von TR8
- R16: Vorwiderstand
- R17: Koppelwiderstand
- C4: Ableitkondensator
- 43: Ausgangsstufe
- DA: Differenzspannungsverstärker
- C5: Koppelkondensatoren
- 9, 10: Verbindungspunkte von R14 mit TR6 bzw. TR7
- 03, 04: Ausgänge von 43

## Patentansprüche

1. Schaltungsanordnung zum selektiven Durchschalten von Lesesignalen eines von mindestens zwei Magnetsystemen eines Mehrfachmagnetkopfes auf einen Lesekanal eines Magnetschichtspeichers unter Verwendung von jeweils an eines der Magnetsysteme angeschlossenen Vorverstärkern und einer Auswahleinrichtung, **dadurch gekennzeichnet,** daß die Vorverstärker (4) jeweils eine Eingangsstufe (41) und eine Endstufe (42) aufweisen, wobei erstere räumlich unmittelbar am Mehrfachmagnetkopf angeordnet und mit der räumlich dem Lesekanal (7) zugeordneten Endstufe über eine flexible, lediglich Signalleitungen umfassende Verbindungsleitung (80) verbunden ist, daß die Endstufe Schaltmittel (TR3, TR4 bzw. TR8, R15 bis R17) zum selektiven Schließen eines Strompfades zwischen der Endstufe und der zugeordneten Eingangsstufe mittels eines Auswahlsignales (SEL) aufweist, daß die Eingangsstufe nach Art eines spannungsgesteuerten Widerstandes ausgebildet ist, der sich selbst hochohmig schaltet, solange die zugeordnete Endstufe nicht aktiviert ist und daß Ausgänge (z. B. 9, 10) aller Endstufen (42), parallel geschaltet, in den Lesekanal (7) eingekoppelt sind.

2. Schaltungsanordnung nach Anspruch 1, **dadurch gekennzeichnet,** daß die Eingangs- und die Endstufe (41 bzw. 42) jedes Vorverstärkers (4) jeweils ein Paar von Transistoren (TR1, TR2 bzw. TR3, TR4) aufweisen, die gemeinsam über die Verbindungsleitung (80) bezüglich ihrer Kollektor-Emitter-Strecken in Serie geschaltet sind, wobei die Basisanschlüsse der Endstufentransistoren (TR3, TR4) Selektionseingänge (SEL) zum Aktivieren des Vorverstärkers und die Kollektoranschlüsse der Endstufentransistoren Verstärkerausgänge (01, 02) bilden und daß die Basisanschlüsse der Eingangsstufentransistoren (TR1, TR2 bzw. TR11, TR21) Jeweils mit einem Ende einer Magnetspule (1) des zugeordneten Magnetsystems des Mehrfachmagnetkopfes verbunden sind.

3. Schaltungsanordnung nach Anspruch 2, **dadurch gekennzeichnet**, daß zum gleichstrommäßigen Vorspannen der Transistoren (TR1, TR2) der Eingangsstufe (41) zwischen deren Kollektoranschlüssen und deren Basisanschlüssen jeweils ein hochohmiger Koppelwiderstand (R2 bzw. R3) sowie zwischen den beiden Basisanschlüssen ein weiterer Widerstand (R4) vorgesehen sind und daß zwischen einem der Enden der Magnetspule (1) und dem zugeordneten Basisanschluß eines der Transistoren ein Kondensator (C1) angeordnet ist.

4. Schaltungsanordnung nach Anspruch 2 oder 3, **dadurch gekennzeichnet**, daß die Kollektor-Emitter-Strecken der Endstufentransistoren (TR3, TR4) über je einen Lastwiderstand (R5 bzw. R6) an positive bzw. negative Versorgungsspannung (VCC) gelegt und den Endstufenausgängen (01 bzw. 02) Kondensatoren (C2 bzw. C3) zum gleichstrommäßigen Entkoppeln des jeweiligen Ausgangssignales vorgeschaltet sind.

5. Schaltungsanordnung nach Anspruch 1, **gekennteichnet durch** einen symmetrischen Aufbau der Eingangs- und der Endstufe (41 bzw. 42) der Vorverstärker (4) mit zwei Signalleitungszweigen und einer gemeinsamen Masseleitung, die in der Eingangsstufe mit einem Mittelabgriff (11) einer Magnetspule (1) des zugeordneten Magnetsystemes verbunden ist, wobei die Enden der Magnetspule komplementäre Lesesignaleingänge der Eingangsstufe bilden.

6. Schaltungsanordnung nach Anspruch 5, **dadurch gekennzeichnet**, daß für jeden Signalleitungszweig jeweils in der Eingangs- und in der Endstufe (41 bzw. 42) jedes Vorverstärkers (4) ein Transistor (TR11, TR21 bzw. TR6, TR7) des gleichen Leitfähigkeitstyps vorgesehen ist und die Emitter- Kollektor-Strecken der beiden Transistoren jedes Leitungszweiges in Serie geschaltet sowie in der Eingangsstufe über Lastwiderstände (R8, R9) parallel an die Masseleitung gelegt sind und daß die Basisanschlüsse der beiden Transistoren der Eingangsstufe deren an die Magnetspule (1) angeschlossene Signaleingänge bilden.

7. Schaltungsanordnung nach Anspruch 6, **dadurch gekennzeichnet**, daß zum gleichstrommäßigen Vorspannen der Eingangsstufentransistoren (TR11 bzw. TR21) deren jeweils an eine Signalleitung der Verbindungsleitung (80) angeschlossene Kollektoren über ein hochohmiges Koppelnetzwerk (R11, R12, R13) mit dem Mittelabgriff (11) der zugeordneten Magnetspule (1) bzw. der Masseleitung verbunden sind, wobei dieses Koppelnetzwerk derart ausgebildet ist, daß es die Eingangsstufentransistoren (TR11, TR21, gebenenfalls TR5) im nicht selektierten Zustand des Vorverstärkers (4) sperrt.

8. Schaltungsanordnung nach Anspruch 7, **dadurch gekennzeichnet**, daß das Koppelnetzwerk je einen kollektorseitig an die Eingangsstufentransistoren (TR11 bzw. TR21) angeschlossenen hochohmigen Widerstand (R11) aufweist, der andererseits mit dem Mittelabgriff (11) der Magnetspule sowie über einen weiteren Widerstand (z. B. R7) mit der Masseleitung verbunden ist.

9. Schaltungsanordnung nach Anspruch 6, **dadurch gekennzeichnet**, daß dem gemeinsamen Masseanschluß der Eingangsstufentransistoren (TRll, TR21) ein lediglich im aktivierten Zustand des Vorverstärkers (4) leitend gesteuerter Schalttransistor (TR5) vorgeschaltet ist, dessen Basis dazu an einen Spannungsteiler (R12, R13) angeschlossen ist, der zwischen dem Mittelabgriff (11) der Magnetspule (1) und dem masseführenden Leitungsanschluß (83) angeordnet ist.

10. Schaltungsanordnung nach einem der Ansprüche 5 bis 9, **dadurch gekennzeichnet**, daß in den Endstufen (42) der Vorverstärker (4) jeweils ein Auswahl netzwerk (TR8, R15 bis R17) zum selektiven Aktivieren des zugeordneten Vorverstärkers mittels eines Auswahlsignales (SEL1 ... SELn) vorgesehen ist und das einen Schalttransistor (TR8) aufweist, dessen Emitter-Kollektor-Strecke in Serie mit einem Kollektorwiderstand (R15) zwischen einer Betriebsspannungsquelle und Masse angeordnet ist, dessen Basis über einen Basiswiderstand (R16) das individuelle statische Ausgangssignal (z. 8. SEL1) zugeführt ist und dessen Kollektor über einen Koppeltiefpaß (R17, C4) parallel mit den Basisanschlüssen der Endstufentransistoren (TR6 bzw. TR7) verbunden ist.

11. Schaltungsanordnung nach einem der Ansprüche 5 bis 10, **dadurch gekennzeichnet,** daß die jeweils an eine Stromquelle (VCC, R14) angeschlossenen Kollektoren der Endstufentransistoren (TR6 bzw. TR7) erste bzw. zweite Signalausgänge des jeweiligen Vorverstärkers (4) bilden und daß die Vorverstärker in Verbindung mit einer weiteren Schaltstufe (43) einen Kanalschalter zum Anschluß der Magnetspulen (1) des Mehrfachmagnetkopfes an den Lesekanal (7) bilden.

12. Schaltungsanordnung nach Anspruch 11, **dadurch gekennzeichnet,** daß die weitere Schaltstufe (43) als Differenzspannungsverstärker (DA) ausgebildet ist, an dessen ersten und zweiten Signaleingang jeweils gemeinsam die Kollektoren der Endstufentransistoren (TR6 bzw. TR7) eines der beiden Signalzweige über je einen Koppelkondensator (C5) gelegt sind und dessen Ausgänge (03, 04) je einen der Anschlüsse an den Lesekanal (7) bilden.

## Claims

1. A circuit arrangement whereby read signals from one of at least two magnet systems of a multiple magnetic head are switched through to a read channel of a magnetic film storage means, using a selection device and preamplifiers each connected to one of the magnet systems, characterised in that the preamplifiers (4) each have an input stage (41) and an output stage (42), the input stage being disposed spatially directly on the multiple magnetic head and connected, via a flexible connecting line (80) comprising signal lines only, to the output stage, spatially associated with the read channel (7), in that the output stage comprises switching means (TR3, TR4 or TR8, R15 to R17) for selectively closing a current path between the output stage and the associated input stage by means of a selection signal (SEL), the output stage is constructed in the form of a voltage-controlled resistor which automatically has a high resistance as long as the associated output stage is not activated, and in that outputs (e.g. 9 and 10) of all the output stages (42) are connected in parallel and coupled in the read channel (7).

2. A circuit arrangement according to claim 1, characterised in that the input stage and the output stage (41, 42) of each preamplifier (4) each comprise a pair of transistors (TR1, TR2 and TR3, TR4), the collector-emitter paths of which are connected in series and in common via the connecting line (80), the base connections of the output-stage transistors (TR3, TR4) forming selection inputs (SEL) for activating the preamplifier and the collector connections of the output stage transistors forming amplifier outputs (01, 02), and in that the base connections of the input stage transistors (TR1, TR2 and TR11, TR21) are each connected to one end of a coil (1) in the associated magnet system of the multiple magnetic head.

3. A circuit arrangement according to claim 2, characterised in that, for DC biasing of the transistors (TR1, TR2) in the input stage (41), a high-value coupling resistor (R2, R3) is disposed between their collector connections and their base connections and an additional resistor (R4) is provided between the two base connections and in that a capacitor (C1) is disposed between one end of the magnet coil (1) and the associated base connection of one of the transistors.

4. A circuit arrangement according to claim 2 or 3, characterised in that the connector-emitter paths of the output-stage transistors (TR3, TR4) are connected via a respective bias resistor (R5, R6) to a positive and negative supply voltage (VCC) and the output stage outputs (01, 02) are connected downstream of capacitors (C2, C3) for DC decoupling of the respective output signal.

5. A circuit arrangement according to claim 1, characterised by a symmetrical construction of the input stage and the output stage (41, 42) of the preamplifiers (4), comprising two signal-line branches and a common earth line which is connected in the input stage to a centre tap (11) of a coil (1) of the associated magnet system, the ends of the magnet coil forming complementary read signal inputs of the input stage.

6. A circuit arrangement according to claim 5, characterised in that a transistor (TR11, TR21 or TR6, TR7) having the same type of conductivity is provided for each signal-line branch in the respective input stage and in the output stage (41, 42) of each preamplifier (4), and the emitter-collector paths of the two transistors in each branch are connected in series and laid parallel to the earth line via load resistors (R8, R9) in the input stage, and in that the base connections of the two transistors in the input stage form the signal inputs thereof connected to the magnet coil (1).

7. A circuit arrangement according to claim 6, characterised in that for the purpose of DC biasing of the input-stage transistors (TR11, TR21) the collectors thereof each connected to a signal line of the connecting line (80) are connected via a high-resistance coupling network (R11, R12, R13) to the centre tap (11) of the associated magnet coil (1) or to the earth line, the coupling network being so constructed that it shuts off the input stage transistors (TR11, TR21, where applicable TR5) when the preamplifier (4) is in the non-selective state.

8. A circuit arrangement according to claim 7, characterised in that the coupling network has a high-value resistor (R11) connected to each input stage transistor (TR11, TR21) on the collector side and connected at the other end to the centre tap (11) of the magnet coil and via an additional resistor (e.g. R7) to the earth line.

9. A circuit arrangement according to claim 6, characterised in that a switching transistor (TR5) controlled so as to be conductive only when the preamplifier (4) is in the activated state is connected upstream of the common earth connection of the input stage transistors (TR11, TR12), for which purpose the transistor base is connected to a voltage divider (R12, R13) disposed between the centre tap (11) of the magnet coil (1) and the earth line connection (83).

10. A circuit arrangement according to any of claims 5 to 9, characterised in that a selection network (TR8, R15 to R17) for selectively activating the associated preamplifier via a selection signal (SEL1... SELn) is provided in the output stage (42) of each preamplifier (4), and comprises a switching transistor (TR8) whose emitter-collector path is disposed in series with a collector resistor (R15) between an operating-voltage source and earth, whose base is supplied with the individual static output signal (e.g. SEL1) via a base resistor (R16), and whose collector is connected via a low-pass coupling filter (R17, C4) in parallel to the base connections of the output stage transistors (TR6, TR7).

11. A circuit arrangement according to any of claims 5 to 10, characterised in that the collectors of the output stage transistors (TR6, TR7) connected to a respective current source (VCC, R14) form first and second signal outputs of the respective preamplifier (4), and the preamplifiers in conjunction with an additional switching stage (43) form a channel switch for connecting the coils (1) of the multiple magnetic head to the read channel (7).

12. A circuit arrangement according to claim 11, characterised in that the additional switching stage (43) is a differential voltage amplifier (DA) whose first and second signal input are respectively connected in common to the collectors of the output stage transistors (TR6, TR7) of one of the two signal branches via a respective coupling capacitor (C5) and whose outputs (03, 04) each form one connection to the read channel (7).

## Revendications

1. Montage pour la commutation sélective de signaux de lecture d'un d'au moins deux systèmes magnétiques d'une tête magnétique multiple sur une voie de lecture d'une mémoire à couche magnétique au moyen de préamplificateurs reliés chacun à un des systèmes magnétiques et d'un dispositif de sélection, caractérisé par le fait que les préamplificateurs (4) présentent chacun un étage d'entrée (41) et un étage final (42), le premier étant monté directement dans l'espace sur la tête magnétique multiple et relié à l'étage final associé dans l'espace à la voie de lecture (7) par une ligne de liaison souple (80) comprenant seulement des lignes de signaux, que l'étage final présente des moyens de commutation (TR3, TR4 ou TR8, R15 à R17) pour la fermeture sélective d'un circuit entre l'étage final et l'étage d'entrée associé au moyen d'un signal de sélection (SEL), que l'étage d'entrée est fait à la manière d'une résistance commandée en tension qui passe d'elle-même à haute résistance tant que l'étage final associé n'est pas activé, et que les sorties (par exemple 9, 10) de tous les étages finals (42), montées en parallèle, sont reliées à la voie de lecture (7).

2. Montage selon la revendication 1, caractérisé par le fait que l'étage d'entrée (41) et l'étage de sortie (42) de chaque préamplificateur (4) présentent chacun une paire de transistors (TR1, TR2 ou TR3, TR4) dont les circuits collecteur-émetteur sont montés en commun en série sur la ligne de liaison (80), les bornes de base des transistors (TR3, TR4) de l'étage final formant des entrées de sélection (SEL) pour l'activation du préamplificateur et les bornes de collecteur des transistors de l'étage final formant des sorties d'amplificateur (01, 02), et que les bornes de base des transistors (TR1, TR2 ou TR11, TR21) de l'étage d'entrée sont reliées chacune à une extrémité d'une bobine d'électro-aimant (1) du système magnétique associé de la tête magnétique multiple.

3. Montage selon la revendication 2, caractérisé par le fait que, pour la polarisation en courant continu des transistors (TR1, TR2) de l'étage d'entrée (41), entre la borne de collecteur et la borne de base de chacun de ceux-ci est prévue une résistance de couplage de valeur élevée (R3, R4) et entre les deux bornes de base est prévue une autre résistance (R4), et qu'entre une des extrémités de la bobine d'électro-aimant (1) et la borne de base associée d'un des transistors est monté un condensateur (C1).

4. Montage selon l'une des revendications 2 et 3, caractérisé par le fait que le circuit collecteur-émetteur de chacun des transistors (TR3, TR4) de l'étage final est mis par l'intermédiaire d'une résistance de charge (R5 ou R6) à une tension d'alimentation positive ou négative (VCC), et avant les sorties (01, 02) de l'étage final sont montés des condensateurs (C2, C3) pour le découplage en courant continu du signal de sortie correspondant.

5. Montage selon la revendication 1, caractérisé par une construction symétrique de l'étage d'entrée (41) et de l'étage final (42) des préamplificiteurs (4) avec deux branches de ligne de signaux et une ligne de masse commune qui est reliée dans l'étage d'entrée à une prise médiane (11) d'une bobine d'électro-aimant (1) du système magnétique associé, les extrémités de cette bobine formant des entrées de signal de lecture complémentaires de l'étage d'entrée.

6. Montage selon la revendication 5, caractérisé par le fait que pour chaque branche de ligne de signaux est prévu dans l'étage d'entrée (41) et dans l'étage final (42) de chaque préamplificateur (4) un transistor (TR11, TR21 ou TR6, TR7) du même type de conductibilité et les circuits collecteur-émetteur des deux transistors de chaque branche de ligne sont montés en série et, dans l'étage d'entrée, sont reliés en parallèle à la ligne de masse par l'intermédiaire de résistances de charge (R8, R9), et que les bornes de base des deux transistors de l'étage d'entrée forment les entrées de signaux de celui-ci reliées à la bobine d'électro-aimant (1).

7. Montage selon la revendication 6, caractérisé par le fait que, pour la polarisation en courant continu des transistors (TR11, TR21) de l'étage d'entrée, les collecteurs de ceux-ci, reliés chacun à une ligne de signaux de la ligne de liaison (80), sont reliés par l'intermédiaire d'un circuit de couplage à haute résistance (R11, R12, R13) à la prise médiane (11) de la bobine d'électro-aimant associée (1) et à la ligne de masse, ce circuit de couplage étant conçu de façon à bloquer les transistors (TR11, TR21, éventuellement TR5) de l'étage d'entrée lorsque le préamplificateur (4) n'est pas sélectionné.

8. Montage selon la revendication 7, caractérisé par le fait que le circuit de couplage présente deux résistances de valeur élevée (R11) reliées chacune du côté collecteur à un des transistors (TR11, TR21) de l'étage d'entrée qui sont d'autre part reliées à la prise médiane (11) de la bobine d'électro-aimant et, par l'intermédiaire d'une autre résistance, (par exemple R7), à la ligne de masse.

9. Montage selon la revendication 6, caractérisé par le fait qu'avant la borne de masse commune des transistors (TR11, TR21) de l'étage d'entrée est monté un transistor de commutation (TR5) qui est rendu conducteur seulement lorsque le préamplificateur (4) est activé et dont la base est pour cela reliée à un diviseur de tension (R12, R13) monté entre la prise médiane (11) de la bobine d'électro-aimant (1) et la borne de ligne à la masse (83).

10. Montage selon l'une des revendications 5 à 9, caractérisé par le fait que dans l'étage final (42) de chacun des préamplificateurs (4) est prévu un circuit de sélection (TR8, R15 à R17) pour l'activation sélective du préamplificateur associé au moyen d'un signal de sélection (SEL1, ..., SELn) et ce circuit de sélection présente un transistor de commutation (TR8) dont le circuit collecteur-émetteur est monté en série avec une résistance de collecteur (R15) entre une source de tension de fonctionnement et la masse, à la base duquel le signal de sortie statique individuel (par exemple SEL1) est envoyé par l'intermédiaire d'une résistance de base (R16), et dont le collecteur est relié en parallèle par l'intermédiaire d'un filtre passe-bas de couplage (R17, C4) aux bornes de base des transistors (TR6, TR7) de l'étage final.

11. Montage selon l'une des revendications 5 à 10, caractérisé par le fait que les collecteurs, reliés chacun à une source de courant (VCC, R14), des transistors (TR6, TR7) de l'étage final forment une première et une deuxième sortie de signaux du préamplificateur (4) associé, et que les préamplificateurs forment en association avec un autre étage de commutation (43) un sélecteur de voies pour la liaison des bobines d'électro-aimant (1) de la tête magnétique multiple à la voie de lecture (7).

12. Montage selon la revendication 11, caractérisé par le fait que l'autre étage de commutation (43) est constitué d'un amplificateur de tension différentielle (DA) à la première et la deuxième entrée de signaux duquel les collecteurs des transistors (TR6, TR7) de l'étage final d'une des deux branches de signaux sont reliés chacun par un condensateur de couplage (C5), et dont les sorties (03, 04) forment chacune une des liaisons à la voie de lecture (7).
